Europäisches Patentamt

(19) European Patent Office

Office européen des brevets

(11) Numéro de publication: **0 272 360**
**B1**

(12) **FASCICULE DE BREVET EUROPEEN**

(45) Date de publication du fascicule du brevet:
14.02.90

(51) Int. Cl.⁴: **G01C 15/04**

(21) Numéro de dépôt: 86402919.4

(22) Date de dépôt: 23.12.86

(54) **Perfectionnement aux bornes cadastrales.**

(43) Date de publication de la demande:
29.06.88 Bulletin 88/26

(45) Mention de la délivrance du brevet:
14.02.90 Bulletin 90/7

(84) Etats contractants désignés:
BE CH DE ES FR GB IT LI

(56) Documents cités:
FR-A- 2 420 122
US-A- 4 185 425

(73) Titulaire: Thevenin, Patrick D., Thilay,
F-08800 Montherme(FR)
Titulaire: Gissinger, Bernard C., Thilay,
F-08800 Montherme(FR)
Titulaire: Thevenin, Stéphane J., Thilay,
F-08800 Montherme(FR)

(72) Inventeur: Thevenin, Patrick D., Thilay,
F-08800 Montherme(FR)
Inventeur: Gissinger, Bernard C., Thilay,
F-08800 Montherme(FR)
Inventeur: Thevenin, Stéphane J., Thilay,
F-08800 Montherme(FR)

(74) Mandataire: Boutin, Antoine et al, CABINET PIERRE
LOYER 77, rue Boissière, F-75116 Paris(FR)

## Description

L'invention est relative aux bornes cadastrales du type en deux parties avec une tête de borne munie d'un perçage central à travers lequel on enfonce un piquet cylindrique dont l'extrémité supérieure de diamètre élargi forme le verrou supérieur de l'ensemble.

Une borne de ce type est décrite dans le brevet français n° 7 333 219. Elle présente l'intérêt d'être particulièrement simple à fabriquer et à poser.

On a constaté à l'usage qu'après un certain temps de service, la terre a tendance à se tasser sous la tête de borne, parce qu'elle a été déplacée soit par intervention humaine (labourage, etc.), soit par suite de l'érosion naturelle sous l'effet de pluies torrentielles s'écoulant au droit de la borne.

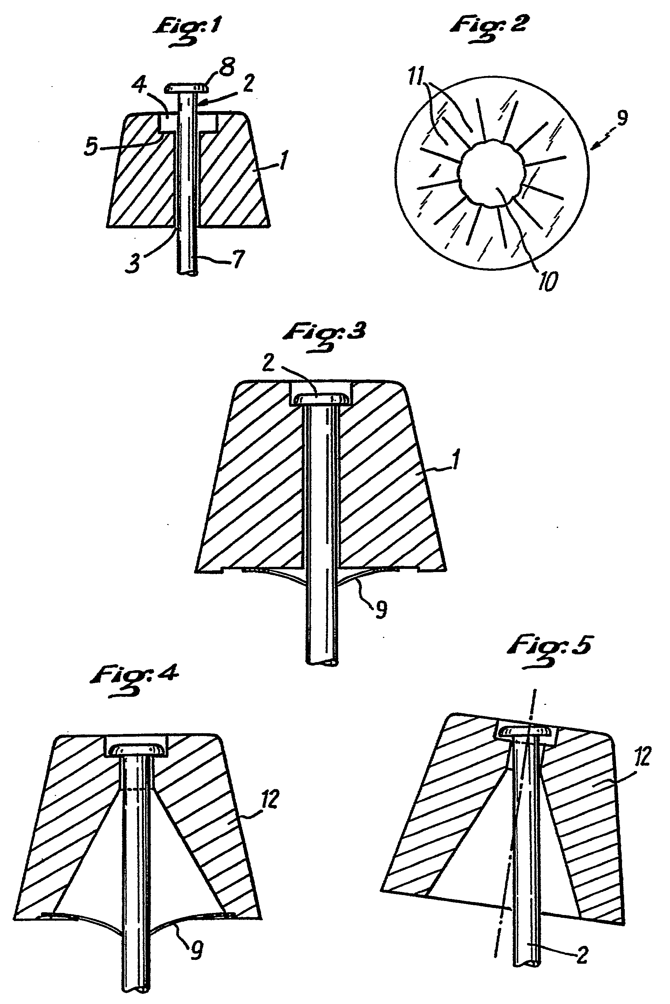

Il en résulte que la tête de borne a tendance à s'abaisser le long de son piquet en dégageant la tête du piquet comme le montre le schéma de la figure 1. Cet état de fait n'affecte en rien l'ancrage de la borne qui reste inarrachable en raison du déploiement des tiges souples contenues dans le piquet après l'enfoncement de ce dernier.

Mais outre l'aspect inesthétique de la tête de piquet en saillie par rapport à la tête de borne, cela présente des inconvénients, tels que le risque de détérioration des pneus d'engins agricoles, ou le risque de blessure pour un promeneur trébuchant sur la borne.

Ce problème ne se pose pas pour les bornes cadastrales de type connu, par exemple par les brevets US n° 4 185 425 de MERKEL ou F n° 2 420 122 de COSSUTA. De telles bornes ne peuvent s'abaisser le long du piquet du fait de leur constitution ou des moyens mis en œuvre pour la solidarisation de la tête et du piquet.

En effet, la tête d'une borne telle que décrite par MERKEL présente une partie pleine en appui sur l'extrêmité du piquet du fait que celui-ci est enfoncé dans un trou borgne. Une telle borne nécessite, par ailleurs, l'utilisation de moyens d'accrochage de la tête au piquet de réalisation complexe.

En ce qui concerne les bornes décrites par COSSUTA, ce sont les moyens d'accrochage de la tête au piquet qui assurent l'arrêt en translation de celle-ci par rapport au piquet vers le haut comme vers le bas. Ces moyens d'accrochage nécessitent, pour leur bon fonctionnement, un parfait respect des dimensions des éléments destinés à collaborer, formés sur la tête et sur le piquet, ce qui complique notablement la fabrication.

L'invention a donc pour but d'assurer la solidarisation de la tête d'une borne, telle que décrite dans le brevet n° 7 333 219, en butée contre la tête du piquet, de manière simple et ne modifiant ni la fabrication, ni le processus de pose d'une telle borne.

Selon l'invention, on solidarise la tête de borne et le piquet au moyen d'un diaphragme constitué par un disque en matériau résistant, tout en présentant une bonne élasticité, muni d'un alésage central de diamètre inférieur à celui du tube du piquet et divisé en secteurs solidarisés entre-eux à la périphérie du disque.

Le diaphragme selon l'invention peut être séparé ou intégré à la tête de borne.

Sa circonférence peut être circulaire ou polygonale.

L'intégration d'un diaphragme selon l'invention à la base d'une tête de borne permet de réaliser des têtes de borne considérablement allégées par évidement de leur base, le diaphragme exerçant alors en outre une fonction de centrage du piquet.

L'invention sera mieux comprise à la lecture de la description ci-après d'exemples de réalisation non limitatifs en référence au dessin annexé sur lequel :

La figure 1 est une vue schématique en coupe verticale d'une tête de borne selon le brevet 73.33219 ayant glissé le long de son piquet.

La figure 2 est une vue schématique en plan d'un diaphragme de solidarisation conforme à l'invention.

La figure 3 est une vue schématique en coupe verticale d'une borne analogue à celle de la figure 1 munie du diaphragme de la figure 2.

La figure 4 est une vue schématique en coupe verticale d'une tête de borne allégée munie d'un diaphragme intégré et montée sur son piquet.

La figure 5 illustre la position que peut prendre une tête de borne évidée conforme à la figure 4 lorsqu'elle ne comporte pas de diaphragme.

En se référant à la figure 1, on voit la tête de borne 1 et partiellement un piquet d'ancrage 2.

La tête 1, qui dans cet exemple a une forme de pyramide tronquée, présente un perçage central 3 de section circulaire muni d'une partie supérieure 4 de plus grande diamètre ménageant avec la partie inférieure de ce perçage un épaulement 5.

Le piquet d'ancrage 2 comprend un corps tubulaire 7 muni à son extrémité supérieure d'une partie ou bague 8 de plus grand diamètre extérieur destinée à coopérer avec l'épaulement 5.

A l'intérieur du tube sont logés des éléments métalliques déformables (non représentés) destinés à être déployés dans le sol à travers les ouvertures de la pointe du piquet après que la position définitive de la borne ait été déterminée comme cela est décrit plus en détail dans le brevet français 73.33129.

Comme représenté, sous l'effet de l'érosion du sol au niveau de la tête de borne, ladite tête 1 a commencé à s'abaisser le long du tube du piquet 2, de sorte que l'extrémité supérieure du tube avec sa bague élargie forment une saillie dangereuse par rapport à la tête de borne.

Pour remédier à cet inconvénient, l'invention propose l'utilisation du diaphragme représenté à la figure 2.

Il s'agit d'un disque 9 muni en son centre d'un alésage 10 de diamètre inférieur à celui du tube du piquet 2 et découpé radialement en secteurs 11 solidarisés par la périphérie du disque.

Le diaphragme 9 est fabriqué dans un matériau rigide mais suffisamment souple pour que les extrémités des secteurs 11 puissent s'écarter dans la direction de pénétration du piquet 2 tout en conservant sur la circonférence de ce dernier un appui élastique qui empêche tout mouvement relatif inverse.

On obtient ainsi un verrouillage irréversible de la position de la tête de borne 1 par rapport au piquet 2 comme cela est montré sur la figure 3.

Il en résulte que en dépit de toute éventuelle érosion du sol, l'extrémité supérieure du piquet ne se dégagera jamais de la tête de borne.

Dans l'exemple de réalisation représenté à la figure 3, le diaphragme 9 est construit indépendamment de la tête de borne 1 et du piquet, la solidarisation des trois éléments s'effectuant au moment de la pose.

Le diaphragme selon l'invention autorise la conception avantageuse d'une tête de borne très allégée comme le montre l'exemple de réalisation de la figure 4.

Il est en effet nécessaire, pour une bonne tenue de la tête de borne, que le piquet soit centré en partie basse et en partie haute de la tête de borne.

Si le centrage n'est effectué que d'un seul côté, comme ce serait le cas avec une tête évidée largement ouverte à sa base, la tête ne se maintient pas en bonne position ainsi que le montre la figure 5.

Dans la réalisation conforme à la figure 4 le diaphragme 9 joue non seulement le rôle de verrou mais assure de surcroît le centrage du piquet 2 dans l'axe longitudinal du perçage 3 ; ce centrage est indispensable pour garantir un bon positionnement de la tête de borne et un guidage rectiligne de l'enfoncement du piquet.

Il devient alors possible d'évider très largement l'intérieur de la tête de borne dont le diaphragme 9 constitue la face inférieure.

On réalise ainsi une importante économie de matière et un allègement significatif du produit autorisant un allègement des emballages et diminution corrélative des coûts de transports.

Le diaphragme 9 devant être utilisé en milieu humide, il doit être fabriqué dans un matériau résistant à la corrosion ou ayant reçu un traitement adéquat à cet effet.

Dans les exemples de réalisation décrits, le diaphragme 9 est avantageusement en acier à ressort inoxydable, mais il peut également être réalisé dans d'autres matériaux présentant les mêmes qualités de rigidité, d'élasticité et de résistance à corrosion.

D'autre part, sans sortir du cadre de l'invention, on peut donner à la périphérie du diaphragme 9 un contour autre que circulaire, par exemple polygonal.

## Revendications

1. Dispositif de verrouillage de la position relative d'une tête de borne le long d'un piquet d'ancrage, caractérisé en ce qu'il est constitué par un diaphragme (9) en matériau rigide présentant une certaine élasticité muni d'un alésage central (10) de diamètre inférieur à celui du piquet (2) et de découpes radiales définissant des secteurs (11) solidarisés entre-eux par la périphérie du diaphragme.

2. Dispositif selon la revendication 1, caractérisé en ce que le diaphragme (9) a une circonférence circulaire.

3. Dispositif selon la revendication 1, caractérisé en ce que le diaphragme (9) à une circonférence polygonale.

4. Dispositif selon l'une quelconque des revendications 1 à 3, caractérisé en ce que le diaphragme est un disque plat en acier à ressort.

5. Tête de borne cadastrale du type comportant un perçage central pour un piquet d'ancrage indépendant, caractérisée en ce qu'elle comporte un dispositif constitue par un diaphragme intégré (9) selon l'une quelconque des revendications 1 à 4.

6. Tête de borne selon la revendication 5, caractérisée en ce que le diaphragme (9) est monté à la base de ladite tête (2) et en ce que cette dernière est évidée.

## Claims

1. Device for locking the relative position of the head of a marker along an anchoring stake, characterized in that it comprises a diaphragm (9) of rigid material having a certain elasticity, provided with a central bore (10) whereof the diameter is less than that of the stake (2) and radial cuts defining sectors (11) mutually connected by the periphery of the diaphragm.

2. Device according to Claim 1, characterized in that the diaphragm (9) has a circular circumference.

3. Device according to Claim 1, charcterized in that the diaphragm (9) has a polygonal circumference.

4. Device according to any one of Claims 1 to 3, characterized in that the diaphragm is a flat disc of spring steel.

5. Head of a boundary marker of the type having a central bore for a separate anchoring stake, characterized in that it has a device comprising an integral diaphragm (9) according to any one of Claims 1 to 4.

6. Head of a marker according to Claim 5, characterized in that the diaphragm (9) is mounted at the base of the said head (2), and in that the latter is hollowed out.

## Patentansprüche

1. Vorrichtung zur Verriegelung der Relativlage eines Grenzsteinkopfes längs einer Pfahlverankerung, dadurch gekennzeichnet, daß sie durch eine Membran (9) aus festem, eine bestimmte Elastizität aufweisendem Materials ausgebildet und mit einer zentralen Bohrung (10) kleineren Durchmessers als der des Pfahls (2) sowie mit strahlenförmigen radialen Einschnitten versehen ist, die Sektoren (11) festlegen, die miteinander über den Rand der Membran verbunden sind.

2. Vorrichtung nach Anspruch 1, dadurch gekennzeichnet, daß die Membran (9) einen kreisförmigen Umfang aufweist.

3. Vorrichtung nach Anspruch 1, dadurch gekennzeichnet, daß die Membran (9) einen polygonalen Umfang aufweist.

4. Vorrichtung nach einem der Ansprüche 1 bis 3, dadurch gekennzeichnet, daß die Membran eine flache Federstahlscheibe ist.

5. Grenzstein der Art mit einer zentralen Bohrung für eine unabhängige Pfahlverankerung, dadurch gekennzeichnet, daß er eine Einrichtung aufweist, die durch eine integrierte Membran (9) nach einem der Ansprüche 1 bis 4 ausgebildet ist.

6. Grenzstein nach Anspruch 5, dadurch gekennzeichnet, daß die Membran (9) am Sockel des Kopfes (2) befestigt und letzteres mit einer Ausnehmung versehen ist.

EP 0 272 360 B1

Fig. 1

Fig. 2

Fig. 3

Fig. 4

Fig. 5